# EUROPEAN PATENT APPLICATION

(11) **EP 1 361 258 A1**
(43) Date of publication of application: **12.11.2003**
(21) Application number: 03008791.0
(22) Date of filing: 23.04.2003
(51) Int. Cl.: C09D 11/02, C09D 11/04, C09D 11/08

(54) **Capsules printed with sepia colored containing inks**

(30) Priority: 08.05.2002 JP 2002132533
(71) Applicant: Warner-Lambert Company LLC, Morris Plains, New Jersey 07950 (US)
(72) Inventor: Taniguchi, Kazuyoshi, Capsugel Japan Inc., Kanagawa Prefecture, 229-1133 (JP); Ohnuki, Hiroshi, Capsugel Japan Inc., Kanagawa Prefecture, 229-1133 (JP); Sai, Eisaku, Capsugel Japan Inc., Kanagawa Prefecture, 229-1133 (JP); Miyata, Kenji, Capsugel Japan Inc., Kanagawa Prefecture, 229-1133 (JP); Takubo, Takahisa, Capsugel Japan Inc., Kanagawa Prefecture, 229-1133 (JP)
(74) Representative: Tesch, Rudolf

(57) **Abstract**

The present invention relates to a hard capsule printed with ink comprising sepia pigment. As a result of using the ink comprising sepia pigment, the hard capsule that is printed with the ink comprising natural pigment and has legibly black printing can be provided.

## Description

### BACKGROUND OF THE INVENTION

The present invention relates to a printed hard capsule, and more particularly, to a hard capsule printed with ink comprising natural sepia pigment.

Printing on hard capsules, and particularly hard gelatin capsules, is widely carried out as a means of transmitting various information such as product name, code number, company name or logo and so forth. Usually, printing ink that contains inorganic pigments such as iron sesquioxide, titanium dioxide or edible aluminum lake pigment, or synthetic tar pigment as the coloring component is used for such printing.

On the other hand, although sepia pigment is developed as edible ink for printing on confections and so forth, it is currently widely used not only in confections, but also by kneading in the production processes of noodles, bread and processed seafood products.

In recent years, demand for the hard capsules has increased not only in the field of pharmaceuticals, but also in the field of foods focusing primarily on so-called health foods. There is however still significant concern among ordinary consumers regarding synthetic colorants. In such a situation, from the viewpoint of appealing to consumers with greater safety, there is also a growing demand for the hard capsules comprising natural pigment that is widely used as colorant in the field of foods in particular.

There is also the need to develop printing ink comprising natural pigment based on the same viewpoint. The printing on capsules differs from other foods in that the transmission of information to users is the primary objective. Therefore there is a need to develop black printing ink in particular from the viewpoint of ease of discrimination.

Ink conventionally used for pharmaceuticals has color such as black, white, brown, green or blue, and includes synthetic tar pigment, iron oxide, titanium dioxide or carbon black as the coloring materials.

However, there are many cases in which natural pigment typically has inferior heat resistance, light resistance, oxidation-reduction resistance and pH stability as compared with synthetic pigment. Thus, even if ink comprising a natural pigment is widely used in the field of foods, a judgment as to whether or not that pigment can be blended into printing ink for capsules cannot be made indiscriminately. Factors to be considered include stability in the printing process, such as color change, etc. and stability following printing including adhesive strength, light resistance, etc. Further consideration must also be given to the effects of interaction with a capsule base. In addition, the capsules printed with natural pigments also must satisfy the required properties for capsules such as dissolution behavior, film strength and so forth.

As a result of our studies for novel ink comprising natural pigment that can be applied to the printing ink for capsules, we found that printing ink comprising sepia pigment as natural pigment is capable of legibly discriminate printing and can allow the printed hard capsules to satisfy the required stability and characteristics under practical condition of production.

### Detailed Description of the Invention

The present invention relates to a hard capsule, and more particularly, to a hard capsule printed with ink comprising natural sepia pigment as the printing ink.

Sepia pigment is a pigment obtained by removing the ink fluid from the ink sac of Sepia officinalis or other Sepiidae and using it as a raw material, and this may be purified or deodorized depending on the particular case. Its pigment component is a polymer of tyrosine, or eumelanin.

Ink comprising sepia pigment can contain edible shellac resin, polysaccharide, stabilizer (thickened polysaccharide), emulsifier, fortifier or the like as the ink carrier, and water, ethyl alcohol, propylene glycol, edible resin or the like as the ink solvent. In addition, commercially available food printing inks, such as Riofresh Black GT-1732C (Toyo Food Color & Chemical Co.,Ltd.) , can also be used.

There are no particular restrictions on the method for printing on hard capsules using the ink comprising sepia pigment, and the printing can be carried out in accordance with conventionally known methods. A gravure/offset-printing machine can be used for printing onto capsules after diluting the original printing ink with alcohol and the like as the need arises.

The hard capsule base may be a known base that can be used in pharmaceuticals and foods, examples of which include gelatin, pullulan, HPMC and the like. Preferred is gelatin capsules. In addition, said capsules may be colored by a known pigment, preferably natural pigment.

Moreover, the ink comprising sepia pigment may also use plasticizers, lubricants or other additives required in accordance with ordinary methods, and is able to adequately achieve the objective as the printing ink even in the presence of these additives.

Black, legible printing is obtained by printing on capsules using the ink comprising sepia pigment. In addition, this printing has peeling resistance and so forth similar to printing obtained with conventional printing ink.

In addition, the capsules printed with the ink comprising sepia pigment of the present invention are stable to both the passage of time and light. For example, gelatin capsules of the present invention are suitable to capsule quality, namely appearance, physical properties and purity tests stipulated by the Japanese Pharmacopoeia. And furthermore when the ability of dissolution is tested in accordance with "dissolution test" defined in the general test and assay of the Japanese Pharmacopoeia, gelatin capsules of the present invention exhibit dissolution behavior completely similar to conventional capsules. Therefore they can be used for pharmaceuticals or foods.

Although the following provides a detailed explanation of the present invention based on its examples, it goes without saying that these examples do not limit the present invention in any way.

### Examples

### Comparative Example 1

Both transparent and white hard gelatin capsules (Capsule size 1) were printed with pharmaceutical gray ink using a gravure/offset-printing machine.

### Example 1

The hard gelatin capsules were printed according to the same method as Comparative Example 1 with the ink comprising sepia pigment (Riofresh Black GT-1732C (Toyo Food Color & Chemical Co.,Ltd.) ) instead of gray ink.

The adhesive strength and light resistance of each of the printing inks of the printed capsules obtained in Comparative Example 1 and Example 1 were tested according to the methods indicated below.

### Example 2 Tape Test

After firmly pressing commercially available tape (Cellotape (registered trademark)) onto the printed surface of the capsule, adhesion of the ink to the adhesive portion of the tape and its peeling were observed when the tape was taken off. As a result of the test, adhesion of the ink comprising sepia pigment was equivalent to that of the current gray ink, and peeling was not observed.

### Example 3 Test Using Ink Removal Tester

The printed surface of the capsule was contacted with fixed glossy paper and then the capsule was moved back and forth over the paper. After treated for a set period of time, the degree of peeling of the printing was observed. As a result of the test, adhesion of the ink comprising sepia pigment was equivalent to that of the current gray ink.

### Example 4 Light Resistance Test

A light resistance test was carried out under the standard conditions used in the pharmaceutical severe testing for hard capsules (irradiation: 1.2 million/lux hr). As a result of the test, the ink comprising sepia pigment exhibited satisfactory light resistance equivalent to that of the current gray ink.

### Example 5

A solution test for the capsules obtained in the above-mentioned Comparative Example 1 and Example 1 was carried out using purified water warmed to 37°C±1°C under the standard conditions stipulated in the Japanese Pharmacopoeia. As a result of the test, the ink comprising sepia pigment was equivalent to the current gray ink, and there were no differences observed in solution times.

As has been explained above, according to the present invention, by using the ink comprising natural pigment that has conventionally been widely used in the field of foods, and particularly the ink comprising sepia pigment, hard capsules can be provided that have legible and stable black printing.

The printed capsules of the present invention are extremely useful in that they can be used for pharmaceuticals or foods and are capable of responding to the needs of users.

## Claims

1. A hard capsule printed with ink comprising sepia pigment.

2. The hard capsule according to claim 1, wherein said hard capsule is made of gelatin.

3. The hard capsule according to claim 1, wherein said hard capsule is made of pullulan.

4. The hard capsule according to claim 1, wherein said hard capsule is made of HPMC.

5. A method for printing on hard capsules, comprising printing on a hard capsule using ink comprising sepia pigment.

6. The method according to claim 5, wherein said hard capsule is made of gelatin.

7. The method according to claim 5, wherein said hard capsule is made of pullulan.

8. The method according to claim 5, wherein said hard capsule is made of HPMC.
